# EUROPÄISCHE PATENTANMELDUNG

(11) **EP 0 705 867 A2**
(43) Veröffentlichungstag der Anmeldung: **10.04.1996**
(21) Anmeldenummer: 95115035.8
(22) Anmeldetag: 25.09.1995
(51) Int. Cl.: C08G 85/00, C08G 69/28

(54) **Verfahren zur Herstellung hochmolekularer Polykondensate**

(30) Priorität: 07.10.1994 DE 4435874
(71) Anmelder: HOECHST AKTIENGESELLSCHAFT, D-65929 Frankfurt am Main (DE)
(72) Erfinder: Henze, Andree, Dr., D-65719 Hofheim (DE); Blatter, Karsten, Dr., D-65817 Eppstein (DE)

(57) **Zusammenfassung**

Zur Herstellung von stickstoffhaltigen Polykondensaten, dispergiert man ein Ausgangsprodukt, das noch reaktive Endgruppen enthält, in einem hochsiedenden, inerten Lösungsmittel, vorzugsweise in Gegenwart eines Dispergierhilfsmittels, destilliert bei erhöhter Temperatur niedermolekulare Nebenprodukte ab, kühlt den Ansatz ab und isoliert das dispergierte Polykondensat. Zur Herstellung des Ausgangsprodukts heizt man ein Gemisch von mindestens zwei miteinander reagierenden Monomeren auf konstante Reaktionstemperatur auf, wobei mindestens teilweise eine Schmelze gebildet wird, aber zunächst keine homogene Schmelze auftritt. Man setzt die Reaktion solange fort, bis eine homogene Schmelze vorliegt. Dann dispergiert man das gebildete Vorkondensat in dem hochsiedenden inerten Lösungsmittel und kondensiert zu Ende.

## Beschreibung

Die vorliegende Erfindung betrifft ein Verfahren zur Herstellung von aliphatischen oder aromatischen Polykondensaten in einem hochsiedenden, inerten Lösungsmittel. Die Erfindung betrifft insbesondere ein Verfahren zur Herstellung von aromatischen Polyamiden, Polyamidimiden, Polyimiden und Polybenzimidazolen.

Verfahren zur Herstellung von Polykondensaten mittels Hochtemperatur-Dispersionskondensation sind seit längerem bekannt. Gemäß EP 306 165 werden hochmolekulare Dispersionen von Polyamiden in einem hochsiedenden Kohlenwasserstoff durch Polykondensation von Nylonsalzen in Gegenwart eines Hypophosphit-Katalysators hergestellt. Die Bereitung der Nylonsalze erfolgt durch Umsetzung aliphatischer, alicyclischer oder aromatischer Dicarbonsäuren mit aliphatischen, alicyclischen oder aromatischen Diaminen. Weder das eingesetzte Nylonsalz noch das erzeugte Polyamid soll unter den Reaktionsbedingungen schmelzen.
Gemäß EP 275163 wird zur Herstellung von Polykondensaten ein polymerisierbares Material, z.B. ein Monomer oder ein Oligomer, in einem inerten, hochsiedenden organischen flüssigen Medium in Gegenwart eines fein verteilten anorganischen Pulvers und eines als Dispergierhilfsmittel wirkenden Copolymerisats mit reaktiven Gruppen dispergiert. Die Reaktion wird bei hohen Temperaturen durchgeführt. Das gebildete Polykondensat soll in dem flüssigen Medium unlöslich sein und liegt am Ende der Reaktion ebenfalls in fein verteiltem Zustand vor. Beschrieben wird die Herstellung von aromatischen oder aliphatischen oder aliphatisch-aromatischen Polyestern, die bei der Reaktionstemperatur zum Teil in geschmolzenem Zustand vorlagen. Stickstoffhaltige Polymere werden nicht erwähnt.

Bei der Dispersionskondensation sind die eingesetzten Monomeren mit dem Dispergiermedium nicht mischbar. Sie können aber Emulsionen oder Dispersionen mit Teilchengrößen unter 100 µm bilden. Auch das entstehende Polymer ist in diesem Medium nicht löslich und liegt am Ende in einem feinverteilten Zustand mit Teilchengrößen unter 100 µm vor. Die Reaktionstemperaturen liegen oberhalb 200°C.

Dieses Polykondensationsverfahren in Dispersion stößt auf Schwierigkeiten, wenn Monomere oder Monomergemische zum Einsatz kommen, die im Anfangsstadium der Reaktion keine homogene Schmelze bilden. Diese Monomergemische sind zwar oft dispergierbar und in dem hochsiedendem Dispergiermedium fein verteilbar; in den einzelnen dispergierten Teilchen des festen Ansatzes liegt jedoch eine inhomogene Verteilung der Monomere vor. Dies führt zu einer breiten Molekulargewichtsverteilung und einem niedrigen Molekulargewicht. Die Polykondensation kann nicht zu Polykondensaten mit technisch interessanten Molmassen von über 10.000 g/mol geführt werden.

Es bestand daher die Aufgabe, Polymere, insbesondere aromatische stickstoffhaltige Polymere, die ein besonders großes Molekulargewicht und/oder eine sehr enge Molekulargewichtsverteilung aufweisen, herzustellen. Das vorliegende Verfahren löst diese Aufgabe.

Es wurde nun ein Verfahren zur Herstellung von Polykondensaten gefunden, bei dem man ein Ausgangsprodukt, das noch reaktive Endgruppen enthält, in einem hochsiedenden, inerten Lösungsmittel dispergiert, man bei erhöhter Temperatur niedermolekulare Nebenprodukte abdestilliert, man den Ansatz abkühlt und das dispergierte Polykondensat isoliert. Dieses Verfahren ist dadurch gekennzeichnet, daß man ein Gemisch von mindestens zwei miteinander reagierenden Monomeren auf konstante Reaktionstemperatur aufheizt, wobei mindestens teilweise eine Schmelze gebildet wird, aber zunächst keine homogene Schmelze auftritt, man die Reaktion solange fortsetzt, bis eine homogene Schmelze vorliegt, man dann das gebildete Vorkondensat in dem hochsiedenden inerten Lösungsmittel dispergiert und zu Ende kondensiert.

Der Zeitpunkt, an dem erstmals ein homogenes Monomer/Oligomer-Gemisch vorliegt, hängt von der Art der verwendeten Monomere oder Monomer-Gemische ab und kann 10 bis 95 % Umsatz entsprechen. Vorzugsweise wird man die Reaktion in der homogenen Schmelze spätestens dann abbrechen, wenn 90 % der abspaltbaren flüchtigen Nebenprodukten abdestilliert worden sind. Die Schmelzekondensation kann dabei in der gleichen Apparatur durchgeführt werden wie die nachfolgende Dispersions-Polykondensation. Vorteilhafterweise werden beide Schritte jedoch in getrennten Apparaturen durchgeführt, die auf die unterschiedlichen Anforderungen der Verfahren (Wärmeübergang, Rührer und z.B. Abdestillation größerer Mengen Nebenprodukte im 1. Schritt) abgestimmt sind. Es ist auch möglich, die in der ersten Stufe des Verfahrens erhaltene Schmelze abzukühlen, erstarren zu lassen, zu zerkleinern und dann für die Dispersions-Polykondensation einzusetzen.

Grundlage der Erfindung ist die Beobachtung, daß viele inhomogene Monomergemische sich in einer Schmelzreaktion mit fortschreitendem Umsatz in eine homogene Oligomerschmelze verwandeln. Diese Oligomerschmelze besitzt jedoch, typisch für eine Polykondensation, auch bei hohen Umsätzen von bis 95 % eine geringe Schmelzviskosität und einen niedrigen Polymerisationsgrad unter 20, obwohl nur noch wenig freies Monomer vorliegt. Die niedrige Viskosität solcher Oligomerschmelzen ermöglicht eine leichte, homogene Dispergierung in dem hochsiedendem Dispergiermedium, in welchem die Polykondensation dann zu Umsätzen nahe 100 %, jedoch deutlich größer 95 % zu Ende geführt werden kann. Dieser zweite Reaktionsschritt ist in einer Schmelzreaktion aufgrund der bei Umsätzen > 95 % sehr stark ansteigenden Viskosität der Polymerschmelze oder sogar einer Verfestigung der Schmelze nur sehr unvollkommen möglich.

Die Aufspaltung der Reaktion in zwei Verfahrensschritte stellt also eine sehr vorteilhafte Kombination von Schmelzekondensation und Dispersionskondensation dar, welche den Zugang zu hochmolekularen Polykondensaten eröffnet, die bei getrennter Anwendung der beiden Verfahren nicht zugänglich sind.

Das erfindungsgemäße Verfahren ist besonders wertvoll zur Herstellung von aromatischen Polyamiden, Polyamidimden, Polyimiden und Polybenzimidazolen, weil dort häufig einer der eingesetzten Monomeren eine aromatische Dicarbonsäure mit einem hohem Schmelzpunkt, insbesondere von über 250°C, und einer geringen Löslichkeit in der Reaktionsschmelze darstellt. Beispiele sind Dicarbonsäuren der allgemeiner Struktur HOOC-R-COOH, wobei R fur 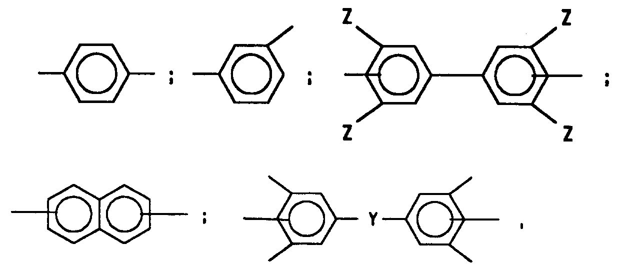
Y fur ― O― ; ― S― ; 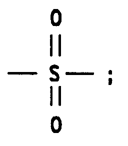
― CH₂― ; 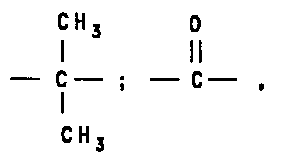
und Z für F, Cl, Br, CH₃, H steht.

Insbesondere gilt dies für Terephthalsäure, Isophthalsäure, die Diphenyletherdicarbonsäuren, Biphenyldicarbonsäuren und Naphthalindicarbonsäuren.

Zum Zweck der Molmassenbegrenzung kann man bis zu 10 Mol.-% (bezogen auf die Mengen der eingesetzten Säuren) einer monofunktionellen Substanz dem Ansatz hinzufügen, d.h. von der Äquivalenz der Gruppen abweichen.

Als hochsiedende inerte Lösungsmittel werden insbesondere hochsiedende Kohlenwasserstoffgemische eingesetzt. Verwendbar ist aber auch jedes andere inerte Reaktionsmedium, das einen hinreichend hohen Siedepunkt besitzt, das synthetisierte Polymer nicht löst und keine Nebenreaktionen mit dem Monomeren oder dem Polymer eingeht.
Besonders bevorzugt sind solche Lösungsmittel, die mit dem in der Polykondensation entstehenden niedermolekularen Nebenprodukt ein Azeotrop bilden und dieses dadurch sehr effektiv aus dem Reaktionssystem durch Destillation entfernen.
Beispiele für derartige inerte Lösungsmittel sind:
a) hydrogenierte Terphenyle, Handelsnamen ®"Santotherm", (Fa. Monsanto)
b) Phenylethergemische unter dem Handelsnamen ®"Marlotherm" (Hüls AG)
c) jedes hochsiedende Kohlenwasserstoffgemisch, beispielsweise "Therminol E" (Shell AG)
d) Gemische oligomerer Fluorverbindungen, beispielsweise ®"Hostinert" der Hoechst AG
und Gemische dieser Lösungsmittel untereinander.

Um die Dispersion in dem hochsiedendem Lösungsmittel stabil zu halten, wird vorteilhafterweise ein Dispergierhilfsmittel zugesetzt.

Die zugesetzten Dispergierhilfsmittel sollen im gesamten Temperaturbereich der Reaktion verhindern, daß sich Aggregate der Monomerteilchen und der Polymerteilchen größer als 100 µm bilden. Im allgemeinen wird man dem Ansatz 1-50 Gew.-% (bezogen auf das Dispergiermedium) Dispergierhilfsmittel zusetzen, um stabile Dispersionen zu erreichen. Bevorzugt sind Mengen von 1-10 Gew.-% und insbesondere 2-4 Gew.-%. Die Dispergierhilfsmittel sollen keine funktionellen Gruppen besitzen, die mit den Monomeren reagieren und dadurch die Polykondensation beeinträchtigen. Insbesondere unerwünscht ist eine Verschiebung der Äquivalenz der funktionellen Gruppen durch das Dispergierhilfsmittel, was zu einer Depression des maximal erreichbaren Polykondensationsgrades führen würde. Selbstverständlich müssen die Dispergierhilfsmittel unter den Bedingungen der Polykondensation hinreichend thermisch stabil sein, da Abbauprodukte zu einer Verschlechterung der Eigenschaft der Polykondensate führen könnten und die stabilisierende Wirkung verringert wird.

Die stabilisierende Wirkung der Dispergierhilfsmittel kann -je nach deren Aufbaudarauf beruhen, daß die Viskosität des inerten Lösungsmittels im Bereich der Polykondensationsreaktion erhöht wird (Beispiel: ®Bentone 38 der Rheox Inc.). Die stabilisierende Wirkung kann auch darauf beruhen, daß die Dispergierhilfsmittel einen amphiphilen Charakter besitzen, d.h. einige funktionelle Gruppen des Dispergierhilfsmittels weisen eine hohe Affinität zum inerten (meist unpolaren) Lösungsmittel, andere funktionelle Gruppen wiederum zum Polykondensat auf. Dies führt zu einer Anreicherung der Dispergierhilfsmittel zwischen Polykondensat und inertem Lösungsmittel. Beispiele für solche Stoffe sind Blockcopolymere und Polymere, insbesondere aus polaren und unpolaren Monomeren, beispielsweise die unter dem Handelsnamen ®"Surlyn" erhältlichen Copolymere der Firma DuPont. Zu dieser Gruppe gehören aber auch niedermolekulare amphiphile Verbindungen, wie z. B. Tenside. Beispielsweise besitzen Pyrrolidone mit langkettigen N-Alkylgruppen, z.B. mit C₆-C₂₆-Alkylgruppen, insbesondere mit C₉-C₂₂-Alkylgruppen, einerseits eine große Affinität zum unpolaren inerten Lösungsmittel sowie eine große Affinität zum Monomer oder Polymer. Die stabilisierende Wirkung der Dispergierhilfsmittel kann ferner darauf beruhen, daß sie die Oberflächenspannung der dispergierten Monomer- und Polymerteilchen verändern.
Der Einsatz von hydrophob behandelten Tonmineralien, wie Bentone 38, ist aus EP 0 275 163 zur Herstellung von aliphatischen Polyamiden und flüssigkristallinen aromatischen Polyestern bekannt.
Es ist auch möglich, mehrere Dispergierhilfsmittel gleichzeitig einzusetzen, von denen beispielsweise eine Komponente die Dispersion der Monomeren stabilisiert, die andere Komponente eine stabilisierende Wirkung auf die Polymerdispersion ausübt.

N-Alkylpyrrolidone haben den Vorteil, daß Dispergierhilfsmittel leicht aus dem Polykondensat im Vakuum abgetrennt werden können.
Das erfindungsgemäße Verfahren eignet sich vorzugsweise zur Herstellung von aromatischen Polyamiden. Dabei wird man zunächst äquimolare Mengen mindestens einer Dicarbonsäure und mindestens eines aromatischen Diamins oder dessen Acylderivat in der Hitze kondensieren, bis eine homogene Schmelze vorliegt, und dann das gebildete Vorkondensat in dem hochsiedendem inertem Lösungsmittel dispergieren. Nachdem man zu Ende kondensiert hat, wird das dispergierte Polyamid isoliert.

Wenn bei der Herstellung des aromatischen Polyamids die eingesetzte Dicarbonsäure einen hohen Schmelzpunkt aufweist, so kann man eine Reaktionstemperatur wählen, die niedriger ist als der Schmelzpunkt der Dicarbonsäure. Dabei darf die Dicarbonsäure nicht völlig löslich sein in der Schmelze der anfangs vorhandenen Monomeren. Falls diese Schmelze sich sofort bilden sollte, beispielsweise bei der Umsetzung von Dimethylterephthalat mit Ethylenglykol, so ist das vorliegende zweistufige Verfahren zwar anwendbar, aber nicht notwendig.

Man kann auch eine Reaktionstemperatur wählen, die höher ist als der Schmelzpunkt der Dicarbonsäure, sofern die geschmolzene Dicarbonsäure nicht völlig mischbar ist in der Schmelze der übrigen Monomeren.

Die Erfindung wird durch die Beispiele näher erläutert.

### Beispiel 1:

a) Herstellung eines Präkondensates durch Schmelzekondensation:
   2 mol (840 g) 2,2-Bis(4-(4-aminophenoxy)phenyl)propan werden in einem Dreihalsglaskolben mit Tropftrichter, Vakuum/Stickstoff-Anschluß und Rührer aufgeschmolzen (140°C) und durch Zutropfen von 4 mol Essigsäureanhydrid acetyliert. Der Tropftrichter wird entfernt und durch eine Destillationsbrücke ersetzt. Man gibt 1,6 mol (265,8 g) Terephthalsäure und 0,4 mol (66,45 g) Isophthalsäure zu und destilliert die bei der Acetylierung gebildete Essigsäure bei 180°C ab. Die Temperatur wird auf 260°C gesteigert und die Polykondensation bis zu 85 % Umsatz geführt, was einer Abdestillation von 85 % der theoretischen Essigsäuremenge entspricht. An diesem Punkt (ca. 1 Stunde) sind die Säuren homogen in der Schmelze (gelb, noch niedrigviskose Oligomere) verteilt. Das zerkleinerte Produkt (I) wird als Monomer in der folgenden Kondensation eingesetzt.
b) Nichtwässrige Dispersions-Polykondensation des Präkondensats
   In einem 2-Liter-Dreihalskolben mit Stickstoffeinleitung, Rührer, Innenthermometer und regelbarer Badheizung werden 233 g Produkt (I) bei 240°C aufgeschmolzen. Das Dispergiermedium stellt man separat her durch Mischen von 400 g Santotherm mit 18,6 g Bentone 38 (4 % bezogen auf Gesamtmenge Santotherm) in einem Dispergator. Nach 10 min werden 6,15 g (5,16 ml) Propylencarbonat (33 % bezogen auf Bentone 38) dazugegeben. Diese Mischung wird langsam zu der 240°C heißen Schmelze des Präkondensates gegeben. Der Mischer wird mit 66 g Santotherm gespült und diese werden ebenfalls zum Reaktionsansatz gegeben.
   Die Temperatur wird unter möglichst starkem Rühren langsam erhöht und beträgt am Schluß 280°C. Die Gesamtreaktionszeit beträgt 8 h.
   Nach Beendigung der Kondensation wird unter Rühren (mindestens bis Verfestigung der dispergierten Teilchen eingetreten ist) abgekühlt und der Reaktionsansatz filtriert, mit Toluol im Mixer gewaschen und getrocknet. Man erhält ein aromatisches Polyamid vom Staudinger Index 1,02 dl/g und einem Verhältnis M_{w}/Mₙ von 2,1. Dieses Pulver läßt sich bei 320°C zu einer flexiblen, mechanisch stabilen Platte verpressen.

Die beiden Reaktionsstufen a) und b) können dabei auch in der gleichen Apparatur ohne Isolierung des Vorkondensates durchgeführt werden.

### Beispiel 2 (Vergleichsversuch ohne Vorkondensation der Monomermischung)

In einem 2l Dreihalskolben mit Stickstoffeinleitung, Rührer, Innenthermometer und Tropftrichter werden 71,84 g 2,2-Bis(4-(4-aminophenoxy)phenyl)propan (0,175 mol) durch mehrmaliges Evakuieren und Wiederbelüften mit Stickstoff unter Stickstoffatmosphäre gesetzt. Der Kolbeninhalt wird aufgeschmolzen und bei ca. 140°C durch Zutropfen von 0,35 mol (34,2 ml) Essigsäureanhydrid acetyliert.
Eine Destillationsbrücke wird aufgesetzt und die entstehende Essigsäure wird anschließend abdestilliert. Der Kolben enthält jetzt insgesamt 86,55 g acetylierte Verbindungen.
Nun werden 23,25 g Terephthalsäure (0,14 mol) und 5,815 g (0,035 mol) Isophthalsäure zugesetzt (Gesamtmenge an Monomeren = 115,6 g).
Während der Destillation werden 400 g Santotherm mit 18,6 g Bentone 38 (4 % bezogen auf Gesamtmenge Santotherm) mit einem Dispergator gemischt. Nach 10 min werden 6,15 g (5,16 ml) Propylencarbonat (33 % bezogen auf Bentone 38) dazugegeben. Das Propylencarbonat verbessert die Scherwirkung auf das Bentone 38. Dies führt zu Erhöhung der Viskosität des Santotherm/Bentone 38-Gemisches.

Diese Mischung wird langsam zu den 230°C heißen Monomeren gegeben. Der Mischer wird mit 66 g Santotherm gespült und diese werden ebenfalls zum Reaktionsansatz gegeben. Die Temperatur wird unter möglichst starkem Rühren auf am Schluß 280°C erhöht. Die Gesamtreaktionszeit beträgt 8 h.

Nach Beendigung der Kondensation wird unter Rühren abgekühlt bis eine Verfestigung der dispergierten Teilchen eingetreten ist. Dann wird der Reaktionsansatz filtriert, mit Toluol gewaschen (im Mixer) und getrocknet.

Man erhält ein hellbeiges Pulver mit einem Staudinger-Index von 0,7 dl/g (in NMP bei 25°C) und einem Verhältnis M_{w}/Mₙ von 2,53. Heißverpressung dieses Pulvers liefert einen mechanisch instabilen, spröden Probenkörper.

### Beispiel 3 (Einsatz von N-Dodecylpyrrolidon als Dispergierhilfsmittel)

287,4 g (= 0,7 mol) 2,2-Bis(4-(4-aminophenoxy)phenyl)propan (= BAB) werden mit 1,45 mol (136,8 ml) Essigsäureanhydrid wie in Beispiel 1 acetyliert und mit 93 g Terephthalsäure (0,56 mol) und 23,26 g Isophthalsäure (0,14 mol) versetzt. Der Ansatz wird unter leichtem Rühren "ankondensiert", bis sich die Säuren in der Schmelze analog Beispiel 1 homogen gelöst haben. Zu der erhaltenen homogenen Schmelze werden bei 240°C 800 g Santotherm und 40 ml N-Dodecylpyrrolidon gegeben. Durch starkes Rühren dispergiert man das Präkondensat und polykondensiert 8 h bei 270°C. Das Polyamid wird durch Filtration isoliert, mit Toluol und Aceton gewaschen und bei 180°C im Vakuum getrocknet. Der Staudinger-Index beträgt 1,1 dl/g in NMP und das Pulver läßt sich bei 320°C zu einer klaren, sehr zähen Platte verpressen.

### Beispiel 4

Das in Beispiel 1 als Dispergierhilfsmittel eingesetzte Bentone 38 läßt sich nahezu vollständig aus dem Polymerpulver entfernen, wenn man die Aufarbeitung des Reaktionsansatzes folgendermaßen varriiert:
Gegen Ende der Reaktion wird die Polyamid-Dispersion auf Zimmertemperatur abgekühlt. Man verdünnt mit der doppelten Menge Toluol, rührt eine halbe Stunde und läßt die Mischung sedimentieren. Nach ca. 10 min ist das Polyamidpulver sedimentiert und die überstehende, sehr feinkörnige Bentone 38-Dispersion kann dekantiert werden. Es wird nochmals mit Toluol aufgeschlämmt und die Sedimentation und das Dekantieren wiederholt. Ein auf diese Weise gereinigtes Polyamid-Pulver enthält nahezu kein Bentone 38 mehr.
Durch Röntgenfluoreszensanalyse läßt sich kein Silizium, das Hauptelement des Bentone 38, mehr nachweisen.

## Patentansprüche

1. Verfahren zur Herstellung von Polykondensaten, wobei man ein Ausgangsprodukt, das noch reaktive Endgruppen enthält, in einem hochsiedenden, inerten Lösungsmittel dispergiert, man bei erhöhter Temperatur niedermolekulare Nebenprodukte abdestilliert, man den Ansatz abkühlt und das dispergierte Polykondensat isoliert, dadurch gekennzeichnet, das man ein Gemisch von mindestens zwei miteinander reagierenden Monomeren auf konstante Reaktionstemperatur aufheizt, wobei mindestens teilweise eine Schmelze gebildet wird, aber zunächst keine homogene Schmelze auftritt, man die Reaktion solange fortsetzt bis eine homogene Schmelze vorliegt, man dann das gebildete Vorkondensat in dem hochsiedenden inerten Lösungsmittel dispergiert und zu Ende kondensiert.

2. Verfahren nach Anspruch 1, dadurch gekennzeichnet, daß man das gebildete Vorkondensat beim Abkühlen erstarren läßt, zerkleinert und dann im dem hochsiedenden inerten Lösungsmittel dispergiert und zu Ende kondensiert.

3. Verfahren nach Anspruch 1, dadurch gekennzeichnet, daß man die homogene Schmelze spätestens dann abkühlt, wenn 90 % der abspaltbaren flüchtigen Nebenprodukten abdestilliert worden sind.

4. Verfahren nach Anspruch 1, dadurch gekennzeichnet, daß man die Reaktion im hochsiedenden inerten Lösungsmittel in Gegenwart eines Dispergierhilfsmittels durchführt.

5. Verfahren nach Anspruch 4, dadurch gekennzeichnet, daß das Dispergierhilfsmittel ein oberflächenaktives Schichtsilikat ist.

6. Verfahren nach Anspruch 5, dadurch gekennzeichnet, daß man das oberflächenaktive Schichtsilikat aus der Dispersion im hochsiedenden inerten Lösungsmittel durch fraktionierte Sedimentation abtrennt.

7. Verfahren nach Anspruch 4, dadurch gekennzeichnet, daß als Dispergierhilfsmittel ein N-Alkylpyrrolidon eingesetzt wird.

8. Verfahren nach Anspruch 7, dadurch gekennzeichnet, daß man das Dispergierhilfsmittel aus dem isolierten Polykondensat durch Trocknen im Vakuum abtrennt.

9. Verfahren nach Anspruch 1, dadurch gekennzeichnet, daß man zunächst äquimolare Mengen mindestens einer aromatischen Dicarbonsäure und mindestens eines aromatischen Diamins oder dessen Acylderivat in der Hitze ohne Lösungsmittel kondensiert bis eine homogene Schmelze vorliegt, man das gebildete Vorkondensat in dem hochsiedenden inerten Lösungsmittel dispergiert, man zu Ende kondensiert und dann das dispergierte Polyamid isoliert.

10. Verfahren nach Anspruch 9, dadurch gekennzeichnet, daß man eine Reaktionstemperatur wählt, die niedriger ist als der Schmelzpunkt der Dicarbonsäure und die Dicarbonsäure nicht völlig löslich ist in der Schmelze der übrigen Monomeren.

11. Verfahren nach Anspruch 9, dadurch gekennzeichnet, daß man eine Reaktionstemperatur wählt, die höher ist als der Schmelzpunkt der Dicarbonsäure und die geschmolzene Dicarbonsäure nicht völlig mischbar ist in der Schmelze der übrigen Monomeren.

12. Verfahren nach Anspruch 1, 10 oder 11, dadurch gekennzeichnet, daß die eingesetzte aromatische Dicarbonsäure ausgewählt wird aus der Gruppe bestehend aus Terephthalsäure, Isophthalsäure, Diphenyletherdicarbonsäuren, Biphenyldicarbonsäuren und 1,4- oder 2,6-Naphthalindicarbonsäure.
